# EUROPÄISCHE PATENTSCHRIFT

(11) **EP 1 537 635 B1**
(45) Veröffentlichungstag und Bekanntmachung des Hinweises auf die Patenterteilung: **14.02.2007**
(21) Anmeldenummer: 03793775.2
(22) Anmeldetag: 28.08.2003
(51) Int. Cl.: H01R 39/38

(54) **BÜRSTE FÜR EINE DYNAMO-ELEKTRISCHE MASCHINE**
BRUSHES FOR A DYNAMO-ELECTRIC MACHINE
BALAI D'UNE MACHINE DYNAMO-ELECTRIQUE

(30) Priorität: 06.09.2002 DE 10241382
(43) Veröffentlichungstag der Anmeldung: 08.06.2005
(73) Patentinhaber: BSH Bosch und Siemens Hausgeräte GmbH, 81739 München (DE)
(72) Erfinder: PETRASKA, Otto, 93059 Regensburg (DE); ZVADA, Daniel, 93051 Regensburg (DE)
(86) Internationale Anmeldenummer: PCT/EP2003/009639
(87) Internationale Veröffentlichungsnummer: WO 2004/023609

(56) Entgegenhaltungen:
- CH-A- 355 849
- US-A- 2 615 939
- US-A- 5 049 772
- US-A- 5 780 952

## Beschreibung

Die vorliegende Erfindung betrifft eine in einer Bürstenführung angeordnete Bürste für eine mechanisch kommutierte dynamo-elektrische Maschine, insbesondere für einen Elektromotor, zur Herstellung und/oder Aufrechterhaltung eines elektrischen Kontaktes oder Gleitkontaktes zwischen einem feststehenden ersten Teil, beispielsweise einer Stromversorgung, und einem Kommutator mit Lamellen, wobei ein elastisches Element die Bürste gegen die Lamellen drückt.

Bürsten und Bürstenanordnungen dienen in Gleitkontaktsystemen der Herstellung eines elektrischen Kontaktes in einer dynamo-elektrischen Maschine, wie z. B. einem Elektromotor, einem Generator oder einer sonstigen Maschine. Durch ein Gleitkontaktsystem wird dabei ein elektrischer Kontakt zwischen einem in der Regel feststehenden ersten und einem beweglichen zweiten Teil hergestellt und/oder aufrechterhalten.

Elektrische Motoren stellen ein besonders wichtiges Anwendungsfeld für Gleitkontaktsysteme dar, so dass nachfolgend nur dieser Teilbereich der dynamo-elektrischen Maschinen behandelt und beschrieben wird, jedoch ausdrücklich ohne Ausschluß einer Anwendung bei sonstigen Maschinen. Bei Motoren stellen Gleitkontaktsysteme eine elektrische Verbindung zwischen einer Stromversorgung bzw. Außenanschlüssen und Wicklungen eines Läufers sicher. Dazu ist in bekannten Motoren beispielsweise eine Bürstenanordnung mit räumlich feststehenden Bürsten in schleifendem Kontakt mit einem Kommutator vorgesehen.

Eine Bürste ist jeweils so unter federnder Belastung angeordnet, dass ein Kontaktbereich der Bürste auf dem Kommutator schleift. Eine mögliche unterschiedliche Bewegung, relative Fixierung oder Anordnung etc. der Bürsten als Teil eines Gleitkontaktsystems sind bei den verschiedenen Bürsten-Bauformen bekannt, so dass sie dementsprechend in den unterschiedlichen Ausführungsformen der Erfindung berücksichtigt werden können.

Es ist bekannt, dass die Bürsten und der Kommutator eines Motors verschleißen. Die Bürsten sind daher federbelastet, um bei im wesentlichen gleichbleibender Andrückkraft in Richtung auf den Kommutator nachgeführt zu werden. Ferner ist bekannt, dass es durch unterschiedlich starken Verschleiß am Kommutator, aber auch durch einen steten Wechsel starker Erwärmung und Abkühlung und/oder thermischen und mechanischen Spannungen im Bereich des Kommutators zu Unrundheiten kommt. So entstehen beispielsweise hervorstehende Lamellenkontakte, die als elektrisch leitende Teile des sich drehenden Kommutators durch die Bürsten zur Ausbildung eines Gleitkontaktsystems zu kontaktieren sind. Die insbesondere thermisch und / oder mechanisch hervorgerufenen radialen Abweichungen verursachen mechanische Schwingungen der Bürsten, die ihrerseits dann den Berührungskontakt mit den Lamellen teilweise oder voll verlieren. Es kommt damit zu Kontaktunterbrechungen und ungleichmäßigem Lauf des Motors, aber auch zu stärkerem Verschleiß an den Bürsten. Ferner können im Zuge des Abhebens der Bürste vom Kommutator und/oder einem harten Aufsetzen auch Lichtbogen entstehen, die zu einer zusätzlichen Erwärmung des Kommutators führen und durch Abbrand noch weiteren Verschleiß an den Bürsten hervorrufen. Ferner wird so die thermische Belastung des Kommutators und des Gleitkontaktsystems weiter erhöht.

Aus der DE 197 55 507 A1 ist eine Bürstenhalterung für mechanisch kommutierte Elektromotoren mit einer Bürstentragplatte und daran befestigten, schachtartigen Führungsköchern für an einem Kommutator des Elektromotors mittels Federkraft angedrückte, rechteckförmige Kohlebürsten bekannt, wobei der Kommutator parallel zu seiner Drehachse sich erstreckende Lamellen und dazwischen angeordnete Schlitze aufweist. Jeder Führungsköcher ist mitsamt den Kohlebürsten in einer Ebene senkrecht zur Führungsrichtung der Kohlebürsten derart verdreht angeordnet, dass die Kohlebürsten zu den parallel angeordneten Lamellen und Schlitzen des Kommutators eine Schrägstellung einnehmen. Durch diese Maßnahme soll gewährleistet werden, dass Geräusche reduziert werden.

In der CH 355 849 A ist ein weiteres elektrisches Gerät mit Bürstenhalter bekannter Art offenbart.

Es ist Aufgabe der vorliegenden Erfindung, durch stabile Bürstenlage eine Verbesserung der Kommutierung zu schaffen.

Erfindungsgemäß wird diese Aufgabe bei einer Bürste der eingangs genannten Art durch die Merkmale des kennzeichnenden Teil des Anspruchs 1 gelöst.

Vorteilhafte Weiterbildungen der Erfindung ergeben sich aus den Unteransprüchen.

In einer vorteilhaften Ausfürhungsform ist das elastische Element so angeordnet, dass es unter einem von der Anpressrichtung der Bürste abweichenden Winkel eine Kraft auf die Bürste ausübt.

Zusätzlich kann vorgesehen sein, dass die Bürste gegenüber der radialen Richtung der Lamellen geneigt angeordnet ist.

Beide Formen von Schrägstellung dienen dazu, Querströme, die durch die Drehbewegung des Kommutators in den Bürsten induziert werden, zu reduzieren.

In einer weiteren vorteilhaften Ausführung der Erfindung ist das oberhalb der Bürste vorgesehene elastische Element als Feder ausgebildet.

Die Erfindung hat außerdem den Vorteil, dass an der Schnittstelle zwischen Bürste und der Bürstenführung eine bessere Wärmeableitung erreicht wird, weil immer sichergestellt ist, dass die Bürste ganzflächig mindestens an zwei Wänden an der inneren Wandung der Bürstenführung anliegt. Dadurch wird Wärme, die durch den Kontakt zwischen der Bürste und dem Kommutator entsteht, über die Bürstenführung abgeleitet.

Die Erfindung hat eine weiteren Vorteil bei kürzeren, z. B. bei bereits verschlissenen, Bürsten. Dort wird die Verkantung / Verkippung der Bürste in der Bürstenführung vermieden, wodurch Störungen des Kommmutierungssystem reduziert und die Lebensdauer der Bürsten erhöht wird.

Durch die erfindungsgemäße Ausführung der Bürste wird eine konstante, nichtschwingende Führung der Bürste bei gleichzeitig guter Temperaturableitung erreicht und Querströme werden reduziert. Durch die Führung der Bürste werden Geräusche reduziert. Außerdem wird eine viel größere Toleranz gegenüber verschiedenen fertigungsbedingten Abmaßen der Bürsten zugelassen. Dadurch lassen sich auch Bürsten einsetzen, die mit geringerem Fertigungsaufwand hergestellt sind. Ebenso können auch Bürstenführungen oder Köcher eingesetzt werden, die gegenüber den bekannten Bürstenführungen bezüglich der Bürsten eine größere Toleranz aufweisen oder aus einem billigeren Material hergestellt sind.

Aufgrund der Neigung der Bürste zur Kommutatorachse und der Kraftkomponente, mit der die Bürste gegen immer dieselbe Wand der Bürstenführung gedrückt wird, wird eine stets stabile Lage der Bürste erreicht.

Nachfolgend wird die Erfindung in einem Ausführungsbeispiel anhand der Zeichnung näher erläutert. Es zeigen
- Figur 1: eine seitliche Draufsicht auf einen Kommutator in Verbindung mit einer Bürste (teilweise geschnitten),
- Figur 2: eine Draufsicht auf die Bürste und den Kommutator von oben,
- Figur 3: eine schematischer Schnitt quer zur Drehachse des Kommutators,
- Figur 4, 5: längs geschnittene Bürsten, jeweils mit einer schematisch dargestellten Lamelle in Kontakt,
- Figur 6: ein Ansicht einer Kontaktfläche einer Bürste auf einem Kommutator und
- Figur 7: eine Schnittansicht eines Kommutators entlang seiner Drehachse mit aufgesetzter Bürste und Darstellung der Kraftvektoren.

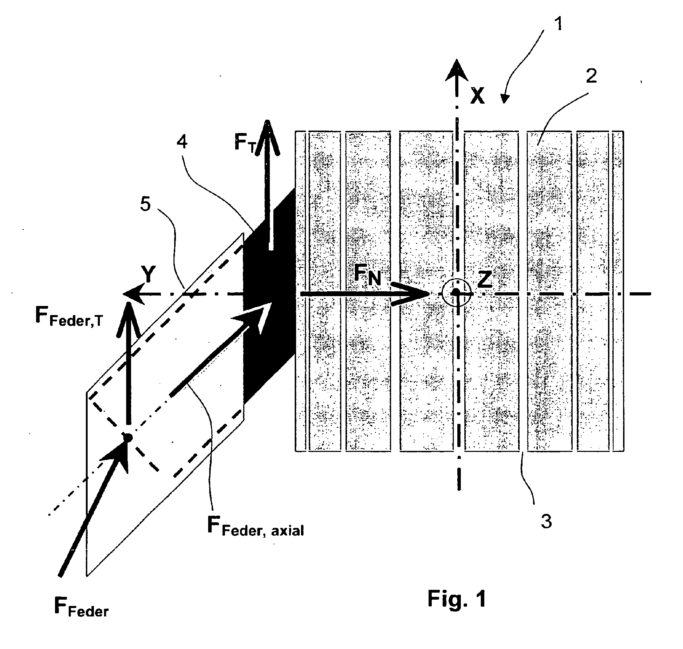

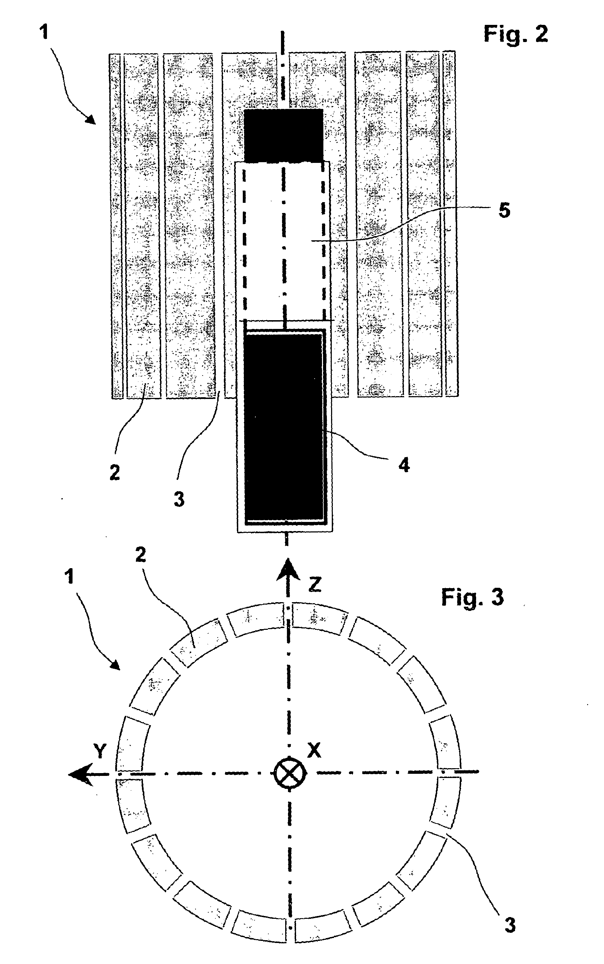

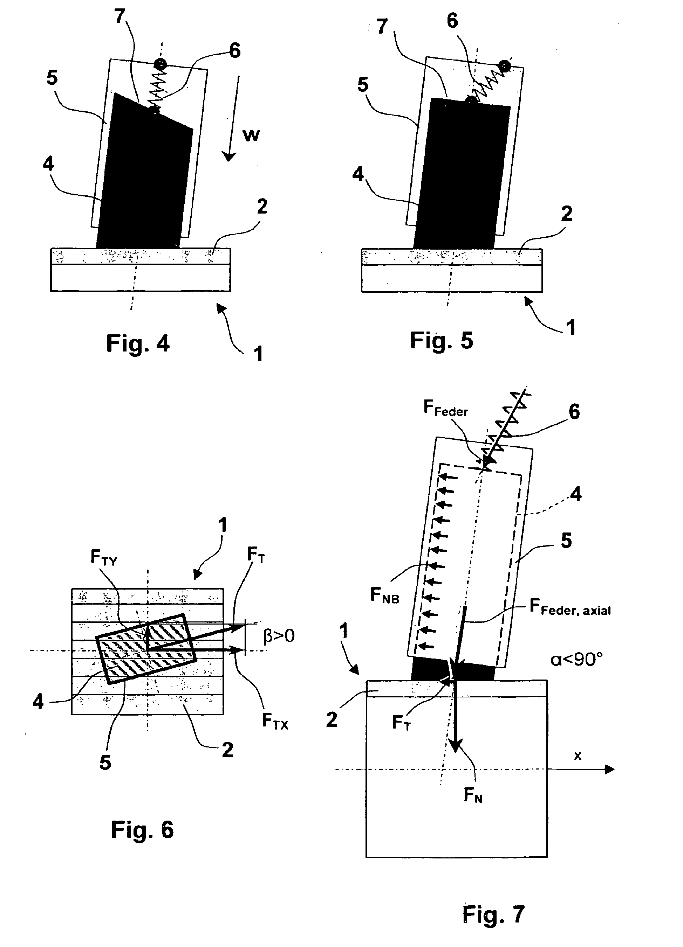

Ein Kommutator 1 (Fig. 1 bis 3) einer elektro-dynamischen Maschine, insbesondere eines Elektromotors, weist eine Vielzahl von Lamellen 2 auf, die sich auf der äußeren Mantelfläche des Kommutators 1 in Längsrichtung, d. h. parallel zur Drehachse x des Motors, erstrecken. Die Lamellen 2 sind durch Schlitze oder Nuten 3 von einander getrennt. In y-Richtung liegt eine Bürste 4 auf den Lamellen 2 auf. Die Bürste 4 wird von einer Bürstenführung 5 gegen die Lamellen 2 gedrückt. Die Anpresskraft wird durch ein elastisches Element, insbesondere eine Feder 6 (Fig. 4, 5), auf die Lamellen 2 ausgeübt.

Wie in Fig. 1 dargestellt, ist die Bürste 4 in der xy-Ebene um die z-Achse gedreht, so dass die Bürste 4 unter einer Neigungsrichtung w gegen die Lamellen 2 gedrückt wird. Gegenüber der Richtung w ist eine Federkraft F_{Feder} in der xy-Ebene weiter gekippt. Die Feder 6 (Fig. 4, 5) drückt die Bürste 4 gegen die Lamellen 2 des Kommutators 1.

Die Federkraft F_{Feder} (Fig. 1) lässt sich somit in zwei Komponenten zerlegen: eine axiale Komponente F_{Feder, axial} und eine Komponente F_{Feder}, _{T}. Diese gewährleistet die stabile Lage der Bürste 4 in der Bürstenführung 5.

Die Kraft F_{Feder, axial,} mit der die Bürste 4 gegen die Lamellen 2 drückt, lässt sich ihrerseits wieder in zwei Komponenten zerlegen: die Kraft F_{N}, die Normalkomponente, die den Kontakt zur Kommutatoroberfläche gewährleistet, und die Kraft F_{T}, die die stabile Lage der Bürste 4 in der Bürstenführung 5 hervorruft.

Eine Zerlegung der Federkraft F_{Feder, axial} lässt sich entweder dadurch erreichen, dass die Feder, wie in Fig. 1 oder 5 dargestellt, gegenüber der Richtung w geneigt ist, oder dadurch, dass die von den Lamellen 2 abgewandte Stirnfläche 7 gegenüber der Neigungsrichtung w der Bürste 4 nicht unter einem rechten Winkel, wie in Fig. 5 dargestellt, sondern unter einem stumpfen Winkel steht. Auch in diesem Fall lässt sich die Federkraft F_{Feder} in zwei Komponenten zerlegen: eine, die die Bürste 4 gegen die innere Wandung der Bürstenführung 5 drückt (F_{NB}, Fig.7), und eine, die die Bürste gegen die Lamellen 2 drückt (F_{N}).

Die Erfindung lässt sich einsetzen, unabhängig davon, ob die Bürste 4 lediglich in der xy-Ebene um die z-Achse gedreht ist, wie in Fig. 1 dargestellt, oder ob die Bürstenkanten zusätzlich auch gegenüber der x-Richtung geneigt sind. Diese Neigung ist durch einen nicht rechteckförmigen Querschnitt der Bürste oder durch die Verkippung der rechteckförmigen Bürste, wie in Fig. 6 dargestellt, realisierbar. In diesem Fall lässt sich die Tangentialkomponente F_{T} der Federkraft F_{Feder}, axial zusätzlich in zwei Komponenten F_{TX} und F_{TY} aufteilen.

Im Beispiel der Fig. 7 ist der Winkel α zwischen der Querrichtung der Hauptebene der Bürstenkontaktfläche zum Kontaktradius am Kollektor gleich 90°. In jedem Fall drückt eine Komponente F_{NB}, wie in Fig. 7 dargestellt, gegen die innere Wandung der Bürstenführung 5, wodurch eine ganzflächige wärmeleitende Verbindung zwischen der Bürste 4 und der Bürstenführung 5 hergestellt ist, so dass eine gute Ableitung der bei der Reibung zwischen der Bürste 4 und den Lamellen 2 entstehenden Wärme garantiert wird. Durch die stabile Lagerung der Bürste 4 werden auch Geräusche weitgehend unterdrückt. Au-ßerdem wird die Entstehung von einen hohen Verschleiß verursachenden und zu Energieverlust führenden Lichtbögen vermieden. Es wird eine konstante, nicht schwingende Halterung der Bürste 4 in der Bürstenhalterung 5 gewährleistet. Dadurch, dass das punkt- und linienförmige Anliegen der Bürste in der Bürstenführung und damit die hohen Kontaktkräfte zwischen der Bürste und der Bürstenführung reduziert bzw. vermieden werden, werden auch die Querströme in der Bürste reduziert bzw. vermieden.

Anstelle der Feder 6 lässt sich auch ein anderes elastisches Element, beispielsweise aus Gummi oder aus einem elastischen Kunststoff, einsetzen.

## Patentansprüche

1. In einer Bürstenführung (5) angeordnete Bürste (4) für eine mechanisch kommutierte dynamo-elektrische Maschine, insbesondere für einen Elektromotor, zur Herstellung und/oder Aufrechterhaltung eines elektrischen Kontaktes oder Gleitkontaktes zwischen einem feststehenden ersten Teil, beispielsweise einer Stromversorgung, und einem Kommutator (1) mit Lamellen (2), wobei ein elastisches Element (6) die Bürste (4) gegen die Lamellen (2) drückt, indem die Bürste (4) gegenüber der Drehachse (x) des Kommutators (1) unter einem vom 90°-Winkel abweichenden Winkel in einer Neigungsrichtung (w) angeordnet ist, und indem das elastische Element (6) unter einer von der Neigungsrichtung (w) der Bürste (4) abweichenden Richtung und unter einem von der Senkrechten auf die dem Kommutator (1) zugewandte Stirnfläche der Bürste (4) abweichenden Winkel eine Federkraft (F_{Feder}) auf die Bürste (4) ausübt, wobei die Federkraft (F_{Feder}) aus zwei Komponenten besteht, einer axiale Kraftkomponente (F_{Feder}, axial) und einer Kraftkomponente (F_{Feder}, _{T}), die eine stabile Lage der Bürste (4) in der Bürstenführung (5) gewährleistet, und wobei die axiale Kraftkomponente (F_{Feder}, ₐₓᵢₐₗ) mit der die Bürste (4) gegen die Lamellen (2) drückt ihrerseits aus zwei Komponenten besteht, einer Normalkomponente (F_{N}), die den Kontakt zur Kommutatoroberfläche gewährleistet, und einer Kraftkomponente (F_{T}), die eine stabile Lage der Bürste (4) in der Bürstenführung (5) gewährleistet und wobei die Bürste (4) rechteckförmig ist, **dadurch gekennzeichnet, dass** die Kraftkomponenten (F_{Feder, T}, F_{T}) der Federkraft (F_{Feder}), die die stabile Lage der Bürste (4) in der Bürstenführung (5) gewährleisten, ausschließlich auf eine der Schmalseiten der Bürste (4) gerichtet sind, so dass die Bürste (4) mit dieser Schmalseite an der Bürstenführung (5) anliegt.

2. Bürste nach Anspruch 1, **dadurch gekennzeichnet, dass** die Bürste (4) zusammen mit der Bürstenführung (5) drehbar gegenüber den Lamellen (2) des Kommutators (1) angeordnet ist, so dass eine einfache Ein- und Verstellung eines Schrägstellungswinkels (β) zwischen der Bürste (4) und den Lamellen sowie den Schlitzen des Kommutators (1) möglich ist.

3. Bürste nach einem der Ansprüche 1 oder 2, **dadurch gekennzeichnet, dass** die Bürste (4) zusammen mit der Bürstenführung (5) um einen Schrägstellungswinkel (β) derart verdreht ist, dass keine Kante der Bürste (4) parallel zur Drehachse (x) liegt.

4. Bürste nach einem der Ansprüche 1 bis 3, **dadurch gekennzeichnet, dass** sie gegenüber der radialen Richtung der Lamellen (2) geneigt angeordnet ist

5. Bürste nach einem der Ansprüche 1 bis 4, **dadurch gekennzeichnet, dass** das elastische Element eine Feder (6) ist.

6. Bürste nach Anspruch 5, **dadurch gekennzeichnet, dass** die Feder (6) unter der von der Neigungsrichtung (w) der Bürste (4) abweichenden Richtung die Federkraft (F_{Feder}) auf die Bürste (4) ausübt, indem die Feder gegenüber der Neigungsrichtung (w) geneigt ist oder indem die von den Lamellen (2) abgewandte Stirnfläche (7) der Bürste (4) gegenüber der Neigungsrichtung (w) der Bürste (4) nicht unter einem rechten Winkel steht.

## Claims

1. Brush (4), which is arranged in a brush guide (5), for a mechanically commutated dynamoelectric machine, particularly for an electric motor, for producing and/or maintaining an electrical contact or sliding contact between a stationary first part, for example a current supply, and a commutator (1) with plates (2), wherein a resilient element (6) presses the brush (4) against the plates (2) in that the brush (4) is arranged relative to the axis (x) of rotation of the commutator (1) at an angle, which differs from a 90° angle, in a direction (w) of inclination and in that the resilient element (6) exerts on the brush (4) a spring force (F_{Feder}) in a direction differing from the direction (w) of inclination of the brush (4) and at an angle differing from the perpendicular to the end face, which faces the commutator (1), of the brush (4), wherein the spring force (F_{Feder}) consists of two components, i.e. an axial force component (F_{Feder, axial}) and a force component (F_{Feder, T}), ensuring a stable position of the brush (4) in the brush guide (5), and wherein the axial force component (F_{Feder, axial}) by which the brush (4) presses against the plates (2) in turn consists of two components, i.e. a normal component (F_{N}), which ensures contact with the commutator surface and a force component (F_{T}) which ensures a stable position of the brush (4) in the brush guide (5), and wherein the brush (4) is rectangular, **characterised in that** the force components (F_{Feder}, _{T}, F_{T}) of the spring force (F_{Feder}), which ensure the stable position of the brush (4) in the brush guide (5), are directed exclusively to one of the narrow sides of the brush (4) so that the brush (4) bears by this narrow side against the brush guide (5).

2. Brush according to claim 1, **characterised in that** the brush (4) together with the brush guide (5) is arranged to be rotatable relative to the plates (2) of the commutator (1) so that a simple setting and adjustment of an inclined setting angle β between the brush (4) and the plates as well as the slots of the commutator (1) is possible.

3. Brush according to one of claims 1 and 2, **characterised in that** the brush (4) together with the brush guide (5) is so turned through an inclination angle (β) that no edge of the brush (4) is parallel to the axis (x) of rotation.

4. Brush according to one of claims 1 to 3, **characterised in that** it is arranged to be inclined relative to the radial direction of the plates (2).

5. Brush according to one of claims 1 to 4, **characterised in that** the resilient element is a spring (6).

6. Brush according to claim 5, **characterised in that** the spring (6) exerts on the brush (4) the spring force (F_{Feder}) in the direction differing from the direction (w) of inclination of the brush (4) **in that** the spring is inclined relative to the direction (w) of inclination or **in that** the end face (7), which is remote from the plates (2), of the brush (4) does not stand at a right angle relative to the direction (w) of inclination of the brush (4).

## Revendications

1. Balai (4) disposé dans un guide-balai (5), destiné à une machine électrodynamique commutée mécaniquement, en particulier à un moteur électrique, pour établir et/ou maintenir un contact électrique ou un contact coulissant entre une première partie fixe, par exemple une alimentation en courant, et un commutateur (1) doté de lamelles (2), un élément élastique (6) repoussant le balai (4) contre les lamelles (2) par le fait que le balai (4) est disposé dans une direction inclinée (w) qui forme un angle différent de 90° par rapport à l'axe de rotation (x) du commutateur (1) et par le fait que l'élément élastique (6) exerce sur le balai (4) une force élastique (F_{élast}) dans une direction différente de la direction d'inclinaison (w) du balai (4) et de la perpendiculaire à la surface frontale du balai (4) tournée vers le commutateur (1), la force élastique (F_{êlast}) étant constituée de deux composantes, à savoir une composante axiale de force (F_{élast, ax}) et une composante de force (F_{élast, T}) qui assure la stabilité de la position du balai (4) dans le guide-balai (5), la composante axiale de force (F_{élast, ax}) par laquelle le balai (4) est repoussé contre les lamelles (2) étant elle-même constituée de deux composantes, à savoir une composante normale (F_{N}) qui assure le contact avec la surface du commutateur et une composante de force (F_{T}) qui assure la stabilité de la position du balai (4) dans le guide-balai (5), le balai (4) étant de forme rectangulaire, **caractérisé en ce que** les composantes (F_{élast, T}, F_{T}) de la force élastique (F_{élast}) qui assure la stabilité de la position du balai (4) dans le guide-balai (5) sont orientées exclusivement sur l'un des côtés étroits du balai (4) de telle sorte que le balai (4) repose par ce côté étroit contre le guide-balai (5).

2. Balai selon la revendication 1, **caractérisé en ce qu'**avec le guide-balai (5), le balai (4) est disposé à rotation par rapport aux lamelles (2) du commutateur (1) de manière à pouvoir établir et modifier l'angle d'obliquité (β) entre le balai (4) et les lamelles ainsi que les fentes du commutateur (1).

3. Balai selon l'une des revendications 1 ou 2, **caractérisé en ce qu'**avec le guide-balai (5), le balai (4) est tourné d'un angle d'obliquité (β) tel qu'aucune arête du balai (4) ne soit parallèle à l'axe de rotation (x).

4. Balai selon l'une des revendications 1 à 3, **caractérisé en ce qu'**il est disposé en position inclinée par rapport à la direction radiale des lamelles (2).

5. Balai selon l'une des revendications 1 à 4, **caractérisé en ce que** l'élément élastique est un ressort (6).

6. Balai selon la revendication 5, **caractérisé en ce que** le ressort (6) exerce sur le balai (4) la force élastique (F_{élast}) dans la direction différente de la direction (w) de l'inclinaison du balai (4) par le fait que le ressort est incliné par rapport à la direction d'inclinaison (w) ou par le fait que la surface frontale (7) du balai (4) non tournée vers les lamelles (2) ne forme pas un angle droit avec la direction d'inclinaison (w) du balai (4).
